# EUROPÄISCHE PATENTSCHRIFT

(11) **EP 1 643 046 B1**
(45) Veröffentlichungstag und Bekanntmachung des Hinweises auf die Patenterteilung: **14.01.2009**
(21) Anmeldenummer: 05020039.3
(22) Anmeldetag: 14.09.2005
(51) Int. Cl.: E04B 1/76, E04F 13/02, C04B 14/38

(54) **Aussenputzzubereitung für Wärmedämmverbundsysteme**
Exterior rendering for multilayer heat insulation systems
Crépis extérieur pour système d'isolation thermique multicouche

(30) Priorität: 04.10.2004 DE 102004048584
(43) Veröffentlichungstag der Anmeldung: 05.04.2006
(73) Patentinhaber: Deutsche Amphibolin-Werke von Robert Murjahn Stiftung & Co KG, 64372 Ober-Ramstadt (DE)
(72) Erfinder: Lassacher, Paul, Dr., 4020 Linz (AT); Enzenberger, Gerhard, 4922 Geiersberg (AT)
(74) Vertreter: Beckord, Klaus

(56) Entgegenhaltungen:
- DE-A1- 19 954 338
- DE-U1- 8 131 584

## Beschreibung

Die Erfindung betrifft eine Außenputzzubereitung, insbesondere als Grundschicht oder Unterputz eines Wärmedämmverbundsystems zur Bedeckung einer Wärmedämmschicht und/oder zur Einbettung einer Armierung. Sie umfasst ein Lösungsmittel, im Allgemeinen Wasser, ein organisches oder zumindest teilweise anorganisches Bindemittel, Füllstoffe und gegebenenfalls Zusatzstoffe und/oder Zusatzmittel. Die Erfindung betrifft außerdem ein pulverförmiges Gemisch, das durch Zugabe eines Lösungsmittels, insbesondere Wasser, unter Bildung einer Dispersion zur außenseitigen Beschichtung von Bauwerken, insbesondere als Grundschicht oder Unterputz für Wärmedämmverbundsysteme zur Bedeckung einer Wärmedämmschicht und/oder zur Einbettung eines Armierungsgewebes verwendet wird. Darüber hinaus betrifft sie ein Wärmedämmverbundsystem, das die oben genannte Außenputzzubereitung umfasst, sowie eine Verwendung einer Außenputzzubereitung und ein Verfahren zur Herstellung eines pulverförmigen Gemisches für eine Außenputzzubereitung.

In Wärmedämmverbundsystemen werden Unterputze zwischen einer Wärmedämmschicht, die auf einer Außenseite einer Gebäudewand aufgebracht wird, und einem Oberputz angeordnet. Während der Oberputz überwiegend den optischen Eindruck des Wärmedämmverbundsystems prägt, bestimmt der Unterputz vor allem seine mechanischen Eigenschaften, insbesondere die Schlagfestigkeit, die Biege-Zugfestigkeit und die Elastizität. An den Unterputz werden hohe Anforderungen gestellt, weil von einer Gebäudeaußenwand im Allgemeinen erwartet wird, dass sie die hohe Belastbarkeit eines Mauerwerks aufweist. Andererseits weist vor allem die Wärmedämmschicht des Wärmedämmverbundsystems in der Regel eine hohe Weichheit auf, da die Wärmedämmschicht des Wärmedämmverbundsystems sich häufig aus geschäumten Polystyrol-Platten zusammensetzt, die auf der Außenseite der Gebäudewand befestigt werden. Da eine Gebäudeaußenwand im Jahresverlauf erheblichen Temperaturunterschieden von durchschnittlich ca. 50° Celsius ausgesetzt ist, sind die Wärmedämmplatten und die Putzbeschichtungen erheblichen Spannungen unterworfen, die einerseits zu Spalten an den Stößen der Wärmedämmplatten und andererseits zum Abscheren der Putzbeschichtung von den Dämmplatten insbesondere an deren Stößen führen. Daher werden seit langem in den Unterputz derartiger Wärmedämmverbundsysteme Armierungen eingebettet. In der Regel wird hierzu ein Armierungsgewebe eingesetzt, weshalb im Folgenden - ohne Beschränkung der Allgemeinheit - von einem Armierungsgewebe ausgegangen wird. Da die Montage des Armierungsgewebes auf der Wärmedämmschicht überwiegend von Hand geschehen muss und kaum mechanisiert oder automatisiert werden kann, ist sie dementsprechend kostspielig.

Bereits in den 80er Jahren bemühte man sich daher darum, eine Putzzusammensetzung zu entwickeln, mit der ein Armierungsgewebe entfallen kann. Eine derartige Rezeptur ist in der DE 30 40 077 C2 offenbart. Demnach kann durch die Zugabe geschnittener alkaliwiderstandsfähiger Glasfasern mit einer Texzahl von 20 bis 200 g/km und einer Länge von 5 bis 33 mm in Anteilen von 0,3 bis 3 Volumen-% ein maschinell auftragbarer Verputz-Trockenmörtel erzielt werden, bei dem ein Einlegen z. B. eines Glasfasergewebes entfallen kann.

Aus der DE 3 429 251 A1 ist eine Wärmedämmung für Bauwerkswände bekannt, die ebenfalls frei von Armierungsgewebe sein soll. Demnach wird das Armierungsgewebe durch ein vorvernetztes oder vernetzbares Kunstharzbindemittel ersetzt, das plastoelastische Eigenschaften zwischen -10° und 40° Celsius, einen Glastemperaturübergang niedriger als -15 ° Celsius und eine Reißdehnung bei -15 ° Celsius von mindestens 200 % aufweist. Beide Wärmedämmungen konnten sich auf dem Markt nicht durchsetzen.

Demgegenüber ist aus der DE 32 38 993 C2 ein Aufbau einer Putzschicht für ein Wärmedämmverbundsystem bekannt, bei dem eine textile Armierung aus einem verseifungs- und schiebefest ausgerüsteten weitmaschigen Gewebe oder Gewirke zum Einsatz kommt, wobei der Schussfaden des Gewebes oder Gewirkes ein gezwirntes Garn ist. Das Gewebe oder Gewirke weist außerdem in Längs- und Querrichtung eine Elastizität von mindestens 3 % und in beiden Richtungen eine Reißfestigkeit von wenigstens 1200 N pro 5 cm Breite auf. Diese hohen Anforderungen an das einsetzende Gewebe oder Gewirke sind dieser Druckschrift nach dadurch zu erfüllen, dass die Armierung ganz oder überwiegend aus Glas- und/oder Kohlenstofffasern besteht. Da außerdem der Schussfaden des Gewebes oder Gewirkes ein gezwirntes Garn sein soll, ist die Herstellung dieser Armierung aufwändig und teuer.

Aus der DE 100 25 193 A1 ist eine Außenputzzubereitung bekannt, die die Merkmale des Oberbegriffs des Anspruchs 1 aufweist. Weiter ist aus dieser Schrift ein pulverförmiges Gemisch bzw. Wärmedämmverbundsystem bekannt, das jeweils die Merkmale des Oberbegriffs des Anspruchs 5 bzw. 6 aufweist.

Weil zumindest keine der genannten Vorrichtungen eine zufriedenstellende Lösung bietet, hat es sich die Erfindung zur Aufgabe gemacht, die bekannten Wärmedämmverbundsysteme insbesondere hinsichtlich einer höheren Schlagfestigkeit weiter zu entwickeln.

Erfindungsgemäß besteht eine Lösung dieser Aufgabe darin, dass bei einer Außenputzzubereitung oben genannter Art ein Teil an Kohlenstofffasern enthalten ist. Die Erfindung wendet sich damit also ab von der Idee, die Festigkeit eines Wärmedämmverbundsystems im Wesentlichen durch ein in den Unterputz eingebettetes Armierungsgewebe zu definieren. Sie verfolgt vielmehr das Prinzip, dem Unterputz selbst eine höhere Festigkeit zu verleihen. Dies geschieht jedoch nicht durch die Wahl eines geeignet erscheinenden Bindemittels, sondern durch die Zugabe von besonders belastbaren Fasern. Dieser Ansatz ist umso überraschender, als Fasern, nämlich Zellulose-, Glas- oder Acrylfasern, bisher im Wesentlichen dazu verwendet wurden, die Verarbeitungsqualität zu beeinflussen oder auch eine bestimmte Schichtdicke zu erzielen. Erfindungsgemäß werden dagegen dem Unterputz Kohlenstofffasern zugemischt, womit der Unterputz insbesondere eine höhere Schlagfestigkeit erhält.

Die Ober- und Untergrenzen der Zugabemengen von Kohlenstofffasern orientieren sich zum einen an einer noch relevanten Änderung der Schlagfestigkeit des Unterputzes durch die Zugabe und zum anderen an der Beeinflussung der Verarbeitbarkeit des Unterputzes. In einer vorteilhaften Rezeptur für den Unterputz machen die Kohlenstofffasern einen Anteil zwischen 0,01 Gewichts-% und 7,0 Gewichts-% aus. Bei einem jenseits der Untergrenze von 0,01 Gewichts-% liegenden Anteil ist eine positive Auswirkung auf die Schlagfestigkeit des Unterputzes zu gering. Jenseits der Obergrenze von 7,0 Gewichts-% Kohlenstofffaser-Anteil im Unterputz beginnt sich dagegen eine Verschlechterung der Verarbeitungseigenschaften des Unterputzes bemerkbar zu machen. Ein Optimum zwischen diesen beiden Kriterien, aber auch im Interesse eines günstigen Kosten-Nutzen-Verhältnisses für die Zugabe von Kohlenstofffasern hat sich ein Wert um etwa 0,4 Gewichts-% herausgestellt. Dabei ist die Angabe "Gewichts-%" als Anteil des Fertigprodukts zu verstehen, also unter Einschluss eines Lösungsmittelanteils.

Neben der Größe des Anteils an Kohlenstofffasern ist für ihre Wirksamkeit auch ihre äußere Form maßgebend. Daher weisen nach einer weiteren vorteilhaften Ausgestaltung der erfinderischen Putzzubereitung die Kohlenstofffasern eine Dicke zwischen 4 µm und 10 µm auf. Als Optimum der Faserndicke hat sich ein Wert von etwa 7,0 bis 7, 5 µm herausgestellt.

Neben der Dicke der Kohlenstofffasern zeitigt auch ihre Länge Auswirkungen auf die Putzzubereitung. In einer vorteilhaften Rezeptur weisen daher die Kohlenstofffasern eine Länge zwischen 1 mm und 10 mm auf. Bereits ab 5 mm Länge der Kohlenstofffasern macht sich eine Beeinträchtigung der Verarbeitung der Putzzubereitung bemerkbar, denn etwa ab diesem Wert beginnt die Putzzubereitung schuppig zu werden. Daher werden Kohlenstofffasern mit einer Länge von ca. 3 mm als Optimum angesehen.

Neben ihrer positiven Auswirkung auf die Schlagfestigkeit des Unterputzes wirkt sich die Zugabe von Kohlenstofffasern auf die Verarbeitungseigenschaften der jeweiligen Zubereitung positiv aus. Diese Wirkungen auf die Verarbeitungseigenschaften können jedoch auch andere, nämlich billigere Fasern übernehmen. Eine weitere vorteilhafte Putzzubereitung weist daher zusätzlich zu den Kohlenstofffasern einen Anteil aus Glas- und/oder Acrylfasern, vorzugsweise zwischen 0,4 bis 2,5 Gewichts-%, auf. Auf diese Weise kann erreicht werden, dass einerseits genügend Fasern für vorteilhafte Verarbeitungseigenschaften in der Putzzubereitung vorhanden sind, und andererseits der Anteil der Kohlenstofffasern auf das für die erhöhte Schlagfestigkeit des Unterputzes erforderliche Maß beschränkt wird. Damit ist eine Putzzubereitung angegeben, die trotz einer signifikant erhöhten Schlagfestigkeit einen Anteil an Kohlenstofffasern aufweist, der die Putzzubereitung nicht übermäßig verteuert, Insbesondere im Zusammenhang mit einem bevorzugten Anteil von Kohlenstofffasern von etwa 0,4 Gewichts-% hat sich ein Anteil von 1,2 Gewichts-% an Glasfasern und etwa 0,6 Gewichts-% an Acrylfasern als Optimum herausgestellt.

Die eingangs genannte Aufgabe wird neben einer Außenputzzubereitung auch von einem pulverförmigen Gemisch der eingangs genannten Art gelöst, das einen Anteil an Kohlenstofffasern enthält. Im Gegensatz zu einer fertigen Außenputzzubereitung bietet das pulverförmige Gemisch den Vorteil, dass es durch den Verzicht auf das Lösungsmittel pro Packungseinheit leichter ist, womit insbesondere Transportkosten eingespart werden können. Auch das pulverförmige Gemisch kann selbstverständlich im Sinne der Ansprüche 2 bis 5 vorteilhaft weitergebildet werden.

Die eingangs genannte Aufgabe wird außerdem durch ein Wärmedämmverbundsystem der oben genannten Art gelöst, bei dem der Unterputz nach Anspruch 1 zusammengesetzt ist. Weitere vorteilhafte Rezepturen des Unterputzes dieses Wärmedämmverbundsystems ergeben sich aus den Ansprüchen 2 bis 5.

Die in der Erfindung gestellte Aufgabe wird auch durch die Verwendung einer Außenputzzubereitung zur Bedeckung einer Wärmedämmschicht und/oder zur Einbettung einer Armierung in ein Wärmedämmverbundsystem gelöst, bei dem ein Anteil an Kohlenstofffasern nach einem der Ansprüche 1 bis 4 enthalten ist.

Die in der Erfindung formulierte Aufgabe wird schließlich auch durch ein Verfahren der eingangs genannten Art zur Herstellung eines pulverförmigen Gemisches gemäß Anspruch 5 gelöst, bei dem ein Anteil an Kohlenstofffasern beigemischt wird. Das Verfahren kann sinngemäß nach einem der Ansprüche 2 bis 4 weitergebildet werden.

Die Erfindung wird im Folgenden anhand eines Beispiels im Prinzip noch näher erläutert:

Um die Wirksamkeit der Zugabe eines Anteils von Kohlenstofffasern zu einer Unterputzzubereitung zu demonstrieren, wurden zwei Rezepturen für den Putz erstellt und miteinander verglichen. Die erste Rezeptur für einen herkömmlichen Unterputz war wie folgt zusammengesetzt:

| | |
|---|---|
| Zellulose | 0,15 % |
| Bentonit | 0,2 % |
| Polyacrylate | 0,2 % |
| Glasfasern | 1,2 % |
| Acrylfasern | 0,6 % |
| Talkfettalkohol | 0,8% |
| Paraffin | 0,5 % |
| Konservierungsmittel | 0,2 % |
| Bindemittel | 12 % |
| Calciumcarbonat | 29,0 % |
| Quarz | 45,0 % |
| Wasser | Rest auf 100 % |

Die zweite Rezeptur für den erfindungsgemäßen Unterputz unterschied sich von der ersten lediglich durch einen zusätzlichen Anteil von Kohlenstofffasern von 0,4 %.

Beide Mischungen sind homogen und lassen sich nach Wasserzugabe im angemachten Zustand sowohl manuell als auch maschinell leicht verarbeiten. Daraus wurden Prüfkörper hergestellt. Der angemachte Unterputz wurde dazu auf Platten aus expandiertem Polystyrol aufgebracht und darin ein Textilglasgitter eingebettet. Als Oberputz wurde ein Kunstharzdispersions-Reibeputz aufgebracht.

Um die Belastbarkeit beider Prüfkörper zu erfassen und zu vergleichen, wurde eine Stoßfestigkeitsprüfung gemäß ETAG (European Technical Approved Guideline) Nr. 4, Pkt. 5.1.3.3 der EOTA (European Organisation of Technical Approvement) durch einen neutralen Prüfer durchgeführt.

Zunächst wurden beide Prüfkörper in einer ersten Versuchsreihe auf ihre Festigkeit gegen einen Stoß mit einem harten Körper gemäß ETAG Nr. 4 Pkt. 5.1.3.3.1 bzw. gemäß ISO 7892, 1988, getestet. In einer ersten Stoßserie wurden drei Stöße mit je 3 Joules (J) mit einer Stahlkugel von 0,5 kg Masse und einer Fallhöhe von 0,61 m gegen den Prüfkörper geführt. Dabei zeigte der Unterputz in der herkömmlichen Zusammensetzung bei allen drei Stößen keinerlei Beschädigungen. Der zweite Prüfkörper mit der erfindungsgemäßen Rezeptur für den Unterputz wurde daher keiner Prüfung unterzogen, weil hier ebenso wenig mit Beschädigungen zu rechnen ist.

In einem zweiten Prüfdurchgang wurden drei Stöße mit je 10 J mit einer Stahlkugel von 1 kg Masse und einer Fallhöhe von 1,02 m auf den Prüfkörper aufgeübt. Der herkömmliche Unterputz zeigte dabei beim dritten Stoß einen Riss, womit der Prüfkörper mit dem herkömmlichen Putzautbau den Versuch gemäß ETAG Nr. 4 nicht bestanden hat.

Der Prüfkörper mit der erfndungemäßen Rezeptur zeigte bei allen drei Stößen mit 10 J. keine Beschädigungen und hatte damit diese Prüfung erfolgreich bestanden.

In einer zweiten Versuchsreihe wurden die Prüfkörper auf Festigkeit gegen Durchstoß ("Perfotest") gemäß ETAG Nr. 4, Pkt. 5.1.3.3.2 untersucht. Der Perfotest simuliert mithilfe eines halbkugelförmigen Stempels einen Stoß einer Kugel mit einer Masse von 0,5 kg und einer Fallhöhe von 0,765 m. Dabei wurden die Prüfkörper zunächst mit einem Stempel von 12 mm Durchmesser und anschließend mit einem solchen mit 6 mm in fünf Stößen beaufschlagt. Aufgrund der kleineren Stoßfläche war bei dem Stempel mit 6 mm Durchmesser eher eine Beschädigung zu erwarten als bei dem größeren Stempel mit 12 mm Durchmesser.

Der Prüfkörper mit der herkömmlichen Rezeptur überstand die Prüfserie mit dem 12-mm-Stempel und fünf Stößen schadlos. Er hatte damit diese Prüfung bestanden.

Anders dagegen verlief die Prüfung mit dem 6 mm-Stempel: Jeder der fünf Stöße perforierte den Prüfkörper mit dem herkömmlichen Unterputz, so dass er diese Prüfung nicht bestanden hatte.

In gleicher Weise wurde auch der Prüfkörper mit der erfinderischen Rezeptur geprüft. Dabei ergab sich folgendes Ergebnis: Wie erwartet zeigte sich bei keinem der fünf Stöße mit dem 12-mm-Stempel eine Beschädigung, geschweige denn ein Durchstoßen. Damit war diese Prüfung bestanden.

Auch die Prüfung mit dem 6-mm-Stempel konnte der erfinderische Putz erfolgreich absolvieren. Bei den ersten drei Stößen zeigte sich keine Perforation. Erst bei den Stößen vier und fünf konnte der Stempel in den Prüfkörper eindringen. Auch dieser Versuch gemäß ETAG Nr. 4 galt damit für den erfinderisch zusammengesetzten Prüfkörper als bestanden.

Diese Prüfergebnisse zeigen eindeutig, dass ein Unterputz mit der erfinderischen Rezeptur trotz nur geringer Erhöhung der Herstellungskosten eine deutlich höhere Festigkeit gegen Stoß bzw. Durchstoß als ein herkömmlicher Unterputz aufweist. Der Einsatz eines Anteils von Kohlenstofffasern im Unterputz verleiht folglich einem Wärmedämmverbundsystem eine deutlich höhere Schlagfestigkeit und Widerstandsfähigkeit.

## Patentansprüche

1. Außenputzzubereitung, insbesondere als Grundschicht oder Unterputz eines Wärmedämmverbundsystems zur Bedeckung einer Wärmedämmschicht und/oder zur Einbettung einer Armierung, umfassend Wasser, ein organisches oder zumindest teilweise anorganisches Bindemittel, und Füllstoffe, **dadurch gekennzeichnet, dass** die Außenputzzubereitung einen Anteil an Kohlenstofffasern zwischen 0,01 Gewichts-% und 7,0 Gewichts-%, vorzugsweise 0,4 Gewichts-% der Putzzubereitung aufweist.

2. Außenputzzubereitung nach Anspruch 1, **dadurch gekennzeichnet, dass** die Kohlenstofffasern eine Dicke zwischen 4 µm und 10 µm, vorzugsweise 7µm aufweisen.

3. Außenputzzubereitung nach einem der obigen Ansprüche, **dadurch gekennzeichnet, dass** die Kohlenstofffasern eine Länge zwischen 1 mm und 10 mm, vorzugsweise von 3 mm aufweisen.

4. Außenputzzubereitung nach einem der obigen Ansprüche, **dadurch gekennzeichnet, dass** sie zusätzlich zu den Kohlenstofffasern einen Anteil an Glas- und/oder Acrylfasern, vorzugsweise zwischen 0,4 bis 2,5 Gewichts-%, besonders bevorzugt von 1,2 Gewichts-% Glasfasern und 0,6 Gewichts-% Acrylfasern, aufweist.

5. Pulverförmiges Gemisch, das durch Zugabe von Wasser, unter Bildung einer Dispersion zur außenseitigen Beschichtung von Bauwerken, insbesondere als Grundschicht oder Unterputz für Wärmedämmverbundsysteme zur Bedeckung einer Wärmedämmschicht und/oder zur Einbettung einer Armierung, verwendet wird, umfassend ein organisches oder zumindest teilweise anorganisches Bindemittel, und Füllstoffe, **dadurch gekennzeichnet, dass** ein Anteil an Kohlenstofffasern zwischen 0,01 Gewichts-% und 7,0 Gewichts-%, vorzugsweise 0,4 Gewichts-% eines pulverförmigen Gemisches enthalten ist.

6. Wärmedämmverbundsystem umfassend eine Wärmedämmschicht, einen Unterputz, in den eine Armierung eingebettet ist, und einen Oberputz, **dadurch gekennzeichnet, dass** der Unterputz nach einem der Ansprüche 1 bis 5 zusammengesetzt ist.

7. Verwendung einer Außenputzzubereitung nach einem der Ansprüche 1 bis 4 zur Bedeckung einer Wärmedämmschicht und/oder zur Einbettung einer Armierung in ein Wärmedämmverbundsystem.

8. Verfahren zur Herstellung eines pulverförmigen Gemisches für eine Außenputzzubereitung zur Bedeckung einer Wärmedämmschicht und/oder zur Einbettung einer Armierung, bei dem ein organisches oder zumindest teilweise anorganisches Bindemittel und Füllstoffe vermischt werden, **dadurch gekennzeichnet, dass** ein Anteil an Kohlenstofffasern zwischen 0,01 Gewichts-% und 7,0 Gewichts-%, vorzugsweise 0,4 Gewichts-% der Putzzubereitung beigemischt wird.

## Claims

1. A preparation for exterior rendering, particularly as an undercoat or primer of a thermal insulation composite system to cover a thermal insulation layer and/or to embed a reinforcement, which preparation comprises water, an organic or at least partially inorganic binder, and filler material, **characterised in that** the preparation for exterior rendering comprises a carbon fibre proportion of between 0.01 weight percent and 7.0 weight percent, preferably 0.4 weight percent, of the rendering preparation.

2. A preparation for exterior rendering according to claim 1, **characterized in that** the carbon fibres have a thickness of between 4 µm and 10 µm.

3. A preparation for exterior rendering according to any of the preceding claims, **characterized in that** the carbon fibres have a length of between 1 mm and 10 mm, preferably a length of 3 mm.

4. A preparation for exterior rendering according to any of the preceding claims, **characterized in that** the preparation, in addition to the carbon fibres, also comprises a proportion of glass fibre and/or acrylic fibre, preferably between 0.4 to 2.5 weight percent, most preferably comprising 1.2 weight percent glass fibre and 0.6 weight percent acrylic fibre.

5. A powder mixture, which, with the addition of water to form a dispersion, is used for the exterior rendering of buildings, in particular as an undercoat or primer for a thermal insulation composite system to cover a thermal insulation layer and/or to embed a reinforcement, comprising an organic or at least partially inorganic binder, and filler, **characterized in that** a proportion of carbon-fibre between 0.01 weight percent and 7.0 weight percent, preferably 0.4 weight percent, is contained in the powder mixture.

6. A thermal insulation composite system comprising a thermal insulation layer, a primer in which a reinforcement is embedded, and a finishing coat, **characterized in that** the primer is composed according to any of claims 1 to 5.

7. Application of an exterior rendering preparation according to any of claims 1 to 4 to cover a thermal insulation layer and/or to embed a reinforcement in a thermal insulation composite system.

8. A method for manufacturing a powder mixture for an exterior rendering preparation for covering a thermal insulation layer and/or for embedding a reinforcement, in which an organic or at least partially inorganic binder and filler are mixed, **characterized in that** a proportion of carbon fibre between 0.01 weight percent and 7.0 weight percent, preferably 0.4 weight percent of the exterior rendering preparation, are added to the exterior rendering preparation.

## Revendications

1. Préparation de crépi extérieur, en particulier sous forme de couche de fond ou de sous-enduit d'un système composite d'isolation thermique pour recouvrir une couche d'isolation thermique et/ou pour noyer une armature, comprenant de l'eau, un liant organique ou au moins partiellement inorganique, et des matières de charge, **caractérisée en ce que** la préparation de crépi extérieur présente une part de fibres de carbone entre 0,01 % en poids et 7,0 % en poids, de préférence de 0,4 % en poids de la préparation de crépi.

2. Préparation de crépi extérieur selon la revendication 1, **caractérisée en ce que** les fibres de carbone présentent une épaisseur entre 4 µm et 10 µm, de préférence de 7 µm.

3. Préparation de crépi extérieur selon l'une quelconque des revendications précédentes, **caractérisée en ce que** les fibres de carbone présentent une longueur entre 1 mm et 10 mm, de préférence de 3 mm.

4. Préparation de crépi extérieur selon l'une quelconque des revendications précédentes, **caractérisée en ce qu'**elle présente additionnellement aux fibres de carbone une part de fibres de verre et/ou de fibres acrylique, de préférence entre 0,4 et 2,5 % en poids, de manière particulièrement préférée de 1,2 % en poids de fibres de verre et de 0,6 % en poids de fibres acryliques.

5. Mélange pulvérulent qui, par ajout d'eau, en formant une dispersion, est utilisé pour le revêtement extérieur de bâtiments, en particulier sous forme de couche de fond ou de sous-enduit pour des systèmes composites d'isolation thermique pour recouvrir une couche d'isolation thermique et/ou pour noyer une armature, comprenant un liant organique ou au moins partiellement inorganique, et des matières de charge granulat, **caractérisé en ce qu'**il est contenu une part de fibres de carbone entre 0,01 % en poids et 7,0 % en poids, de préférence de 0,4 % en poids du mélange pulvérulent.

6. Système composite d'isolation thermique comprenant une couche d'isolation thermique, un sous-enduit dans lequel est noyée une armature, et une couche de finition, **caractérisé en ce que** le sous-enduit est composé selon l'une des revendications 1 à 5.

7. Utilisation d'une préparation de crépi extérieur selon l'une des revendications 1 à 4 pour recouvrir une couche d'isolation extérieure et/ou pour noyer une armature dans un système composite d'isolation thermique.

8. Procédé de fabrication d'un mélange pulvérulent pour une préparation de crépi extérieur pour recouvrir une couche d'isolation extérieure et/ou pour noyer une armature, dans lequel on mélange un liant organique ou au moins partiellement inorganique et des matières de charge, **caractérisé en ce qu'**on ajoute une part de fibres de carbone entre 0,01 % en poids et 7,0 % en poids, de préférence de 0,4 % en poids de la préparation de crépi.
